Europäisches Patentamt

European Patent Office

Office européen des brevets

(19)

(11) Veröffentlichungsnummer: **0 309 669 B1**

# (12) EUROPÄISCHE PATENTSCHRIFT

(45) Veröffentlichungstag der Patentschrift: **30.12.92**

(21) Anmeldenummer: **88111357.5**

(22) Anmeldetag: **14.07.88**

(51) Int. Cl.⁵: **H04N 7/133**, H04N 7/13

(54) **Verfahren zur szenenmodellgestützten Bilddatenreduktion für digitale Fernsehsignale.**

(30) Priorität: **30.09.87 DE 3733021**

(43) Veröffentlichungstag der Anmeldung:
**05.04.89 Patentblatt 89/14**

(45) Bekanntmachung des Hinweises auf die
Patenterteilung:
**30.12.92 Patentblatt 92/53**

(84) Benannte Vertragsstaaten:
**DE FR GB IT**

(56) Entgegenhaltungen:
**EP-A- 0 201 679**
**WO-A-86/04757**
**DE-A- 2 329 588**

(73) Patentinhaber: **SIEMENS AKTIENGESELL-**
**SCHAFT**
**Wittelsbacherplatz 2**
**W-8000 München 2(DE)**

(72) Erfinder: **Strobach, Peter, Dr.**
**Bahnsteig 6**
**W-8391 Röhrbach(DE)**

EP 0 309 669 B1

**Beschreibung**

Die vorliegende Erfindung bezieht sich auf ein Verfahren zur szenenmodellgestützten Bilddatenreduktion für digitale Fernsehsignale, wobei ein zum Zeitpunkt t angeliefertes Bildsignal zu codieren ist, wobei als Referenz ein bereits zum Zeitpunkt t-1 codiertes Vorgängerbild aus einer Szene in einem Bildspeicher vorliegt und wobei die Bild-zu-Bild-Information aus einer Verstärkung, einer Verschiebung und einer adaptiv gewonnenen Quadtree-Teilungsstruktur besteht.

Verfahren zur Bilddatenreduktion für digitale Fernsehsignale sind aus dem Stand der Technik als sog. "Hybridcodierer" bekannt, welche im wesentlichen auf zwei voneinander unabhängigen Verfahren basieren, die gemeinsam einen Hybridcodierer ergeben, vergl. z. B. W.H. Chen und W.K. Pratt, "Scene adaptive Coder", IEEE Transactions on Communications, Vol. COM-32, No. 3, pp. 225-232, 1984; H. Hölzlwimmer, W. Tengler und A. V. Brandt, "A new hybrid coding technique für videoconference applications at 2 Mbit/s", Proc. SPIE conf. on image coding, pp. 250-259, 1985. G. Kummerfeldt, F. May und W. Wolf, "Coding television signals at 320 und 64 kbit/s", Proc. SPIE conf. on image coding, pp. 119-128, 1985. Es sind dies:

1. Bewegungskompensierte zeitliche Prädiktion

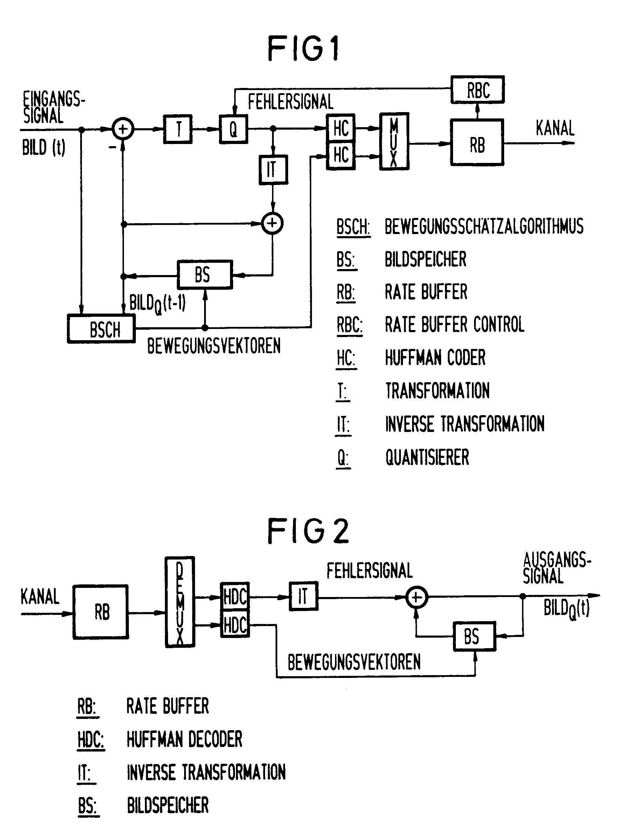

Dabei wird der Bildspeicher in Segmente (Blöcke) fester Größe (typisch: 16x16 Pixel) unterteilt. Diese Blöcke können in ihrer örtlichen Lage im Bildspeicher entlang der Bewegungsvektoren verschoben werden. Damit gelingt es, bewegte Objekte in aufeinanderfolgenden Bildern einer Szene wenigstens näherungsweise zur Deckung zu bringen. Das Vorhersagefehlersignal in der DPCM-Schleife des Coders (siehe dazu Fig. 1) wird dadurch minimiert und teilweise dekorreliert.

2. Transformationscodierung des Prädiktionsfehlersignals

Das bereits durch die bewegungskompensierte Prädiktion minimierte Vorhersagefehlersignal wird nun im zweiten Schritt mit Hilfe einer Transformation (typisch: Diskrete Cosinustransformation - DCT, siehe Fig. 1) weiter dekorreliert. Die zu übertragende Information setzt sich demnach bei einem Hybridcodierer aus den folgenden Komponenten zusammen:

1. Bewegungsvektoren

2. Transformiertes und quantisiertes Fehlersignal nach bewegungskompensierter Prädiktion.

Bei der Analyse des nach der bewegungskompensierten Prädiktion verbleibenden Fehlersignals stellt man fest, daß dieses Signal bereits stark dekorreliert ist und besonders an Luminanzkanten (Objekträndern) signifikante (diracähnliche) Amplituden aufweist. Ein derart beschaffenes Signal läßt sich durch Transformation kaum noch weiter dekorrelieren. In der Tat benötigen konventionelle Hybridcodierer etwa 74% der gesamten verfügbaren Datenrate für die Übertragung dieses Fehlersignals, das doch nur etwa 5% der Energie des ursprünglichen Bildsignals beinhaltet. Dieser beachtliche Aufwand an Datenrate wäre nur dann zu rechtfertigen, wenn es sich bei dem Fehlersignal tatsächlich um signifikante Information im Sinne der Erhaltung einer guten subjektiven Bildqualität handeln würde. Dies ist jedoch offensichtlich nicht der Fall, denn das Fehlersignal hat nur an starken Luminanzkanten signifikante Amplituden, und gerade an Luminanzkanten werden Fehler vom menschlichen Auge ohnehin stark "maskiert" (d. h. kaum wahrgenommen). Siehe dazu auch die psychooptischen Meßergebnisse in der Druckschrift P. Pirsch, "Quellencodierung von Bildsignalen", NTZ, Bd. 37, Heft 1, pp. 33-34 und Heft 2, pp. 105-106, 1984. In der Tat haben Versuche ergeben, daß man das Fehlersignal nach einer gelungenen Bewegungskompensation bei der Rekonstruktion im Empfänger völlig weglassen könnte, ohne daß eine erkennbare Verfälschung des rekonstruierten Bildes eintritt. Da Hybridcodierer jedoch auf einer DPCM in zeitlicher Richtung basieren, ist die Übertragung des Fehlersignals unbedingt erforderlich, um einen stabilen Betrieb aufrecht zu erhalten, ganz gleich, ob das Fehlersignal im Empfänger nun zu einer Verbesserung der subjektiven Bildqualität beiträgt oder nicht. Um die vorgegebene Kanalrate einhalten zu können, ist es zusätzlich erforderlich, Spektralanteile (DCT-Koeffizienten) des Fehlersignals grob zu quantisieren oder gänzlich wegzulassen. Diese Maßnahmen haben nun - im Sinne einer guten subjektiven Bildqualität - meist graviererende Folgen als das Weglassen des gesamten Fehlersignals, denn die Rekonstruktion des Fehlersignals aus einem inkompletten Koeffizientensatz führt in der Regel auf ein Signal, welches ungünstigerweise nun auch an solchen Stellen im Bild signifikante Amplituden aufweist, an denen sich keine Luminanzkante, sondern homogene Flächen befinden.

Diese Störungen sind dann vom menschlichen Auge deutlich zu erkennen und stellen eine erhebliche Minderung der subjektiven Bildqualität dar. Nach dieser Analyse kommt man zu dem Schluß, daß konventionelle Hybridcodierer durch das mit einem großen Prozentsatz der verfügbaren Datenrate übertragene, seiner hochfrequenten Anteile beraubte Fehlersignal eher eine Verschlechterung der subjektiven Bildqualität bewirken.

Der vorliegenden Erfindung liegt die Aufgabe zugrunde, ein Verfahren der eingangs genannten Art zu schaffen, das auf zuverlässige Weise die zuvor genannten Mängel bekannter Verfahren zur Bilddatenreduktion beseitigt, und welches eine optimale subjektive Bildqualität bei optimaler Ausnutzung der verfügbaren Datenrate gewährleistet.

Die der Erfindung zugrundeliegende Aufgabe wird durch ein Verfahren der eingangs genannten Art und gemäß dem Oberbegriff des Patentanspruchs 1 gelöst, das durch die im kennzeichnenden Teil des Patentanspruchs 1 angegebenen Merkmale charakterisiert ist.

Vorteilhafte Weiterbildungen der Erfindungen sind durch die in dem Unteranspruch angegebenen Merkmale gekennzeichnet.

Im folgenden wir die Erfindung anhand mehrerer Figuren im einzelnen beschrieben.

Fig. 1    zeigt das Blockschaltbild eines herkömmlichen Hybridcodierers mit bewegungskompensierter zeitlicher Prädiktion und Transformationscodierung des Fehlersignals für die Sendeseite eines Übertragungssystems.

Fig. 2    zeigt das Blockschaltbild eines herkömmlichen Hybridcodierers für die Empfangsseite des Übertragungssystems.

Fig. 3    zeigt einen objektorientierten Szenencoder (Sender) gemäß der vorliegenden Erfindung.

Fig. 4    zeigt einen objektorientierten Szenencoder (Empfänger) gemäß der vorliegenden Erfindung.

Fig. 5    zeigt eine sog. Quadtree-Struktur zur adaptiven hierarchischen Aufteilung eines Bildes in Blöcke variabler Größe.

Fig. 6    zeigt eine schematische Darstellung eines Gesamtbildes zum Zeitpunkt t mit zugehörigem Bildausschnitt $S_t$ der Dimension $L^2$.

Fig. 7    zeigt eine schematische Darstellung der Unterteilung eines Bildausschnitts der Größe L x L Pixel in vier Sub-Bildausschnitte der Größe $\frac{L}{2}$ x $\frac{L}{2}$ Pixel.

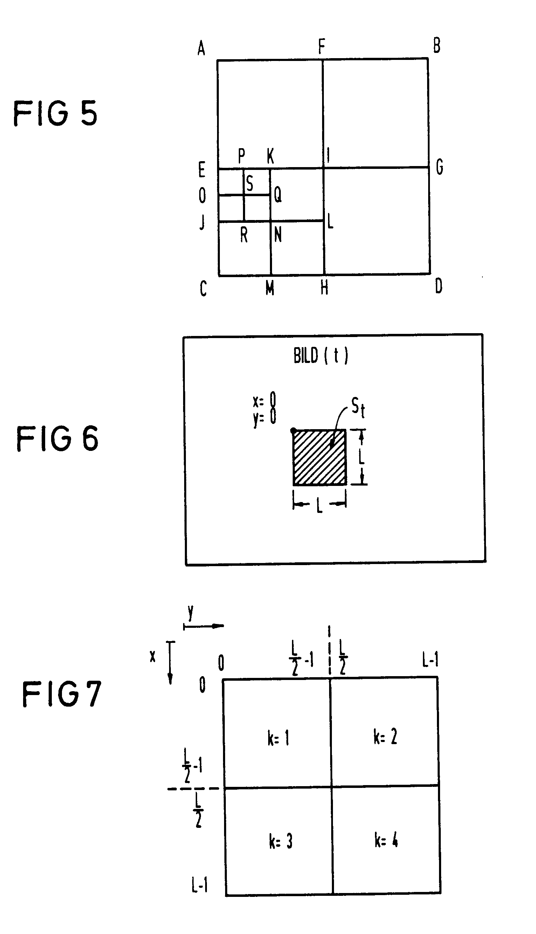

Der Erfindung liegt die Erkenntnis zugrunde, daß zeitlich aufeinanderfolgende Bilder einer Szene sehr "ähnlich" sind. Veränderungen in aufeinanderfolgenden Bildern sind etweder die Folge einer echten Innovation, d. h. neue Szeneninhalte werden aufgebaut, oder die Folge von Bewegungen bereits bekannter Objekte in der Szene. Man benötigt also als Grundlage für die Informationsverarbeitung von Szenen ein entsprechendes Szenenmodell, welches in der Lage ist, die obengenannten Elementarvorgänge "Innovation" und "Bewegung" effizient zu beschreiben. Ein geeignetes Szenenmodell wurde bereits vorgeschlagen. Dabei wird gezeigt, daß sich die Elementarvorgänge "Innovation" und "Bewegung" durch ein Szenenmodell beschreiben lassen, welches ein Bild aus seinem Vorgängerbild durch Verstärkung einzelner Teilbereiche, sowie anschließender Verschiebung dieser Teilbereiche entlang von zuvor geschätzten Bewegungsvektoren aufbaut. Veränderungen in der Szene werden also durch den Parametersatz bestehend aus "Verstärkungsfaktor" und "Verschiebungsvektor" modelliert. Dabei ist es ganz wesentlich, zu beachten, daß der Parametersatz durch die Minimierung eines zentralen Fehlerkriteriums geschätzt wird. Dadurch wirken die beiden Parameter "Verstärkungsfaktor" und "Verschiebungsvektor" in jedem Falle in orthogonalen Optimierungsrichtungen und erzielen in jedem Falle ein optimales Ergebnis im Sinne einer effizienten Datenreduktion. Nun ist es noch wesentlich, die stationären Gebiete im aktuellen Szenenbild zu bestimmen, welche dann durch einen gemeinsamen Parametersatz beschreibbar sind. Dies geschieht bei dem neuen szenenadaptiven Coder durch die Unterlegung einer Quadtree Struktur, vergl. T.Y. Young und K.S. Fu, Handbook of pattern recognition and image processing, Academic, 1986 und Fig. 5. Der Aufbau des Quad-Trees erfolgt dabei in hierarchischer Weise durch die Entscheidung zwischen zwei Hypothesen:

1. Hypothese:

4 benachbarte Blöcke der Größe nxn Pixel haben gleiche Parameter (Verstärkung, Verschiebung) und können demnach zu einem übergeordneten Block der Größe 2nx2n Pixel zusammengefaßt werden.

2. Hypothese:

4 benachbarte Blöcke der Größe nxn Pixel haben jeweils unterschiedliche Parametersätze und müssen deshalb unterschiedlich behandelt werden.

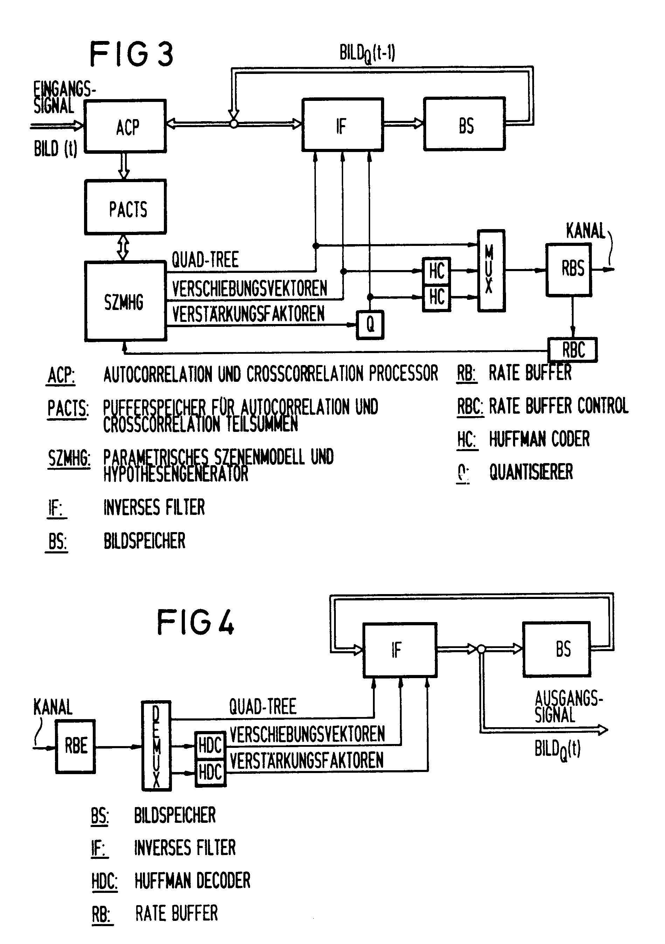

Durch dieses hierarchische Vorgehen bei der Zusammenfassung stationärer Teilgebiete ist es möglich,

EP 0 309 669 B1

beginnend bei etwa Blockgröße nxn = 2x2 schließlich Teilgebiete bis zur Größe nxn = 32x32 zusammenzufassen. Dadurch läßt sich eine extrem hohe Datenkompression erreichen. Die erforderliche feine Auflösung in instationären Gebieten (Ränder bewegter Objekte) bleibt jedoch voll erhalten, da sich das Verfahren dort für die Hypothese 2 (benachbarte Blöcke nicht zusammenfassen) entscheidet. Das Verfahren arbeitet also inhaltsorientiert. Die unterlegte, inhaltsabhängige Teilungsstruktur (Quadtree) muß also mit zum Empfänger übertragen werden. Neuere Untersuchungen haben ergeben, daß die Codierung und Übertragung des Quadtree nur etwa 2% der gesamten verfügbaren Datenrate von 64kbit/sec in Anspruch nimmt. Fig. 3 zeigt das Blockschaltbild des neuen inhaltsorientierten Coders. Es müssen insgesamt 3 Informationen übertragen werden:

1. Quad-Tree (ca. 2% der Gesamtrate)
2. Verstärkungsfaktoren (ca. 49% der Gesamtrate)
3. Bewegungsfaktoren (ca. 49% der Gesamtrate)

Die Übertragung eines Prädiktionsfehlersignals entfällt. In homogenen Bereichen des Bildes können deshalb keine störenden Artefakte mehr auftreten. Der zugehörige Empfänger (Fig. 4) weist einen einfachen Aufbau auf. Der benötigte Rechenaufwand für die Rekonstruktion des Bildes im Empfänger beträgt nur 1 Multiplikation pro Pixel.

Funktionsweise des neuen Verfahrens

Es wird ein Bildausschnitt der Größe LxL Pixel in einem Bild zum Zeitpunkt t betrachtet, wobei die Blockgröße in Zweierpotenzen variiert werden kann:

$$L = 2, 4, 8, 16, 32 \qquad (1)$$

Die Lage des Bildausschnitts sei durch die Pixeladresse des oberen, linken Pixels im Bildausschnitt bestimmt. Aus Gründen der einfacheren Schreibweise wird diese an sich variable Adresse im folgenden auf $(x = 0, y = 0)$ festgelegt. Die Pixel innerhalb des Bildausschnitts seien in der Pixelmatrix $S_t$ zusammengefaßt:

$$S_t = \begin{bmatrix} s_t(0,0) & s_t(0,1) & \cdots & s_t(0,L-1) \\ s_t(1,0) & s_t(1,1) & & \cdot \\ \cdot & & & \cdot \\ \cdot & & & \cdot \\ s_t(L-1,0) & \cdots\cdots\cdots\cdots & & s_t(L-1,L-1) \end{bmatrix} \qquad (2)$$

vergl. dazu Fig. 6.

Analog in dem um einen Zeittakt zurückliegenden Bild ist ein Bildausschnitt definiert, der jedoch zusätzlich um i-Positionen in x-Richtung und um j-Positionen in y-Richtung verschoben werden kann:

$$S_{t-1}(i,j) = \begin{bmatrix} s_{t-1}(i,j) & s_{t-1}(i,j+1) & \cdots & s_{t-1}(i,j+L-1) \\ s_{t-1}(i+1,j) & s_{t-1}(i+1,j+1) & & \cdot \\ & & & \cdot \\ & & & \cdot \\ s_{t-1}(i+L-1,j) & \cdots\cdots\cdots\cdots & s_{t-1}(i+L-1,j+L-1) \end{bmatrix} \qquad (3)$$

Anschließend werden folgende Größen definiert:

m    Verschiebebereich: $-m \leq i,j \leq m$

g    Steigungsfaktor: $0 \leq g \leq 0.1$

$s_u$    Untere Schwelle für Hypothesenentscheider

$s_o$    Obere Schwelle für Hypothesenentscheider

4

$C_t(i,j)$     Kreuzkorrelationsfunktion für Bildausschnitt zum Zeitpunkt t korreliert mit Bildausschnitt zum Zeitpunkt t-1, welcher um i-Pixelpositionen in x-Richtung und um j-Positionen in y-Richtung verschoben ist.

$C_t^{(k)}(i,j)$     Kreuzkorrelationsfunktionen der Sub-Bildausschnitte k, k=1,2,3,4, vergl. dazu Fig. 7.

$A_{t-1}(i,j)$     Signalenergie des Bildausschnitts zum Zeitpunkt t-1.

$A_{t-1}^{(k)}(i,j)$     Signalenergien der Sub-Bildausschnitte k, k=1,2,3,4 zum Zeitpunkt t-1.

$E_t$     Vorhersagefehlerenergie für Bildausschnitt.

$E_t^{(k)}$     Vorhersagefehlerenergien der Sub-Bildausschnitte k, k=1,2,3,4

$\rho(i,j)$     Optimierungsfunktion für Bildausschnitt.

$\rho^{(k)}(i,j)$     Optimierungsfunktionen für Sub-Bildausschnitte k=1,2,3,4.

$\rho(i,j)$     Kostenfunktion für Optimierungsfunktionen.

$v = \begin{bmatrix} i_{opt}, & j_{opt} \end{bmatrix}^T$     Bewegungsvektor geschätzt aus Bildausschnitt.

$v^{(k)} = \begin{bmatrix} i_{opt}^{(k)}, & j_{opt}^{(k)} \end{bmatrix}^T$     Bewegungsvektoren geschätzt aus Sub-Bildausschnitten.

$a(i_{opt}, j_{opt})$     Verstärkungsfaktor geschätzt aus Bildausschnitt.

$a^{(k)}(i_{opt}^{(k)}, j_{opt}^{(k)})$     Verstärkungsfaktoren geschätzt aus Subbildausschnitten.

wobei:

$$C_t(i,j) = \sum_{x=0}^{L-1} \sum_{y=0}^{L-1} s_t(x,y)s_{t-1}(x+i,y+j) \qquad (4)$$

$$A_{t-1}(i,j) = \sum_{x=0}^{L-1} \sum_{y=0}^{L-1} s_{t-1}^2(x+i,y+j) \qquad (5)$$

$$C_t^{(k)}(i,j) = \sum_{x=\alpha}^{\beta} \sum_{y=\gamma}^{\delta} s_t(x,y)s_{t-1}(x+i,y+j) \qquad (6)$$

$$A_{t-1}^{(k)}(i,j) = \sum_{x=\alpha}^{\beta} \sum_{y=\gamma}^{\delta} s_{t-1}^2(x+i,y+j) \qquad (7)$$

mit $-m \leq i,j \leq m$

Die folgende Tabelle gibt Sub-Bildausschnitte und die zugehörigen Summationsgrenzen an , vergl. auch Fig. 7:

| k | $\alpha$ | $\beta$ | $\gamma$ | $\delta$ |
|---|---|---|---|---|
| 1 | 0 | (L/2)-1 | 0 | (L/2)-1 |
| 2 | 0 | (L/2)-1 | L/2 | L-1 |
| 3 | L/2 | L-1 | 0 | (L/2)-1 |
| 4 | L/2 | L-1 | L/2 | L-1 |

Es gelten ferner:

$$\rho(i,j) = \frac{C_t(i,j)C_t(i,j)}{A_{t-1}(i,j)} \qquad (8)$$

$$\rho^{(k)}(i,j) = \frac{C_t^{(k)}(i,j)C_t^{(k)}(i,j)}{A_{t-1}^{(k)}(i,j)} \qquad (9)$$

$$\phi(i,j) = 1 - g\sqrt{i^2 + j^2} \qquad (10)$$

Algorithmus zur Schätzung des Bewegungsvektors für Bildausschnitt:

```
AMAX = 0                                                        (A1)
FOR i = -m, -m+1, ... m-1, m  do the following:
  FOR  j = -m, -m+1, ..., m-1, m   do the following:
    RRHO = ρ(i,j)* φ(i,j)
    IF(RRHO) > AMAX)THEN
    AMAX = RRHO
    i_opt = i
    j_opt = j
    ENDIF
```

Algorithmus zur Schätzung der Bewegungsvektoren der vier
Sub-Bildausschnitte:

```
FOR k = 1, 2, 3, 4 do the following:                           (A2)
  AMAX = 0
  FOR j = -m, -m+1, ..., m-1, m   do the following:
    FOR  j = -m, -m+1, ..., m-1. m   do the following:
      RRHO = ρ^(k)(i,j)*φ(i,j)
      IF(RRHO) > AMAX)THEN
      AMAX = RRHO
      i^(k)_opt = i

      j^(k)_opt = j

  ENDIF
```

Berechnung des Verstärkungsfaktors für den Bildausschnitt:

$$a(i_{opt}, j_{opt}) = C_t(i_{opt}, j_{opt}) / A_{t-1}(i_{opt}, j_{opt}) \qquad (11)$$

$$= (i_{opt}, j_{opt}) / C_t(i_{opt}, j_{opt})$$

<u>Berechnung der Verstärkungsvaktoren für Sub-Bildausschnitte:</u>

$$a^{(k)}(i_{opt}^{(k)}, j_{opt}^{(k)}) = C_t^{(k)}(i_{opt}^{(k)}, j_{opt}^{(k)}) / A_{t-1}^{(k)}(i_{opt}^{(k)}, j_{opt}^{(k)}) \qquad (12)$$

$$= \varrho^{(k)}(i_{opt}^{(k)}, j_{opt}^{(k)}) / C_t^{(k)}(i_{opt}^{(k)}, j_{opt}^{(k)})$$

<u>Berechnung der Vorhersagefehlerenergie für Bildausschnitt:</u>

$$E_t = \sum_{x=0}^{L-1} \sum_{y=0}^{L-1} \left[ s_t(x,y) - a(i_{opt}, j_{opt}) s_{t-1}(x+i_{opt}, y+j_{opt}) \right]^2$$

$$(13)$$

<u>Berechnung der Vorhersagefehlerenergien für Sub-Bild-</u>
<u>ausschnitte:</u>

$$E_t^{(k)} = \sum_{x=\alpha}^{\beta} \sum_{y=\gamma}^{\delta} \left[ s_t(x,y) - a^{(k)}(i_{opt}^{(k)}, j_{opt}^{(k)}) s_{t-1}(x+i_{opt}^{(k)}, y+j_{opt}^{(k)}) \right]^2$$

$$(14)$$

Die Berechnungen (4 - 14) sind in der folgenden Weise auf die Baugruppen des erfindungsgemäßen Szenencoders (Fig. 3) verteilt:

1. Autocorrelation und Crosscorrelation Processor (ACP)

Dieser Prozessor berechnet die Größen:

$$C_t(i,j) \qquad \text{entsprechend der Vorschrift (4)}$$

$$A_{t-1}(i,j) \qquad \text{entsprechend der Vorschrift (5)}$$

$$C_t^{(k)}(i,j) \qquad \text{entsprechend der Vorschrift (6)}$$

$$A_{t-1}^{(k)}(i,j) \qquad \text{entsprechend der Vorschrift (7)}$$

2. Pufferspeicher für Autocorrelation und Crosscorrelation (PACTS)

Die Ergebnisse der Berechnungen des ACP für einen Bildausschnitt werden in PACTS abgelegt und für die Weiterverarbeitung in der Baugruppe SZMHG (wie folgt) bereitgestellt.

3. Parametrisches Szenenmodell und Hypothesengenerator (SZMHG)

Die Baugruppe SZMHG berechnet zunächst den Optimierungsfaktor entsprechend (8), sowie die vier getrennten Optimierungsfaktoren entsprechend (9), sowie anschließend den zugehörigen Bewegungsvektor v entsprechend dem Algorithmus (A1), sowie die Bewegungsvektoren $v^{(k)}$ entsprechend dem Algorithmus (A2).

Schließlich erfolgt die Berechnung des Verstärkungsfaktors für den Bildausschnitt entsprechend (11) und die Berechnung der vier Verstärkungsfaktoren für die vier Sub-Bildausschnitte (siehe Fig. 7) entsprechend der Vorschrift (12).

Im nächsten Verfahrensschritt wird überprüft, ob es "günstiger" ist, mit den vier getrennten Sub-Bildausschnitten (siehe Fig. 7), denen ebenfalls getrennte Bewegungsvektoren und getrennte Verstärkungsfaktoren zugeordnet sind, fortzufahren (Hypothese 1), oder ob es doch möglich ist, die vier Sub-Bildausschnitte in einem Bildausschnitt mit zugehörigem gemeinsamen Bewegungsvektor und gemeinsamen Verstärkungsfaktor zusammenzufassen (Hypothese 2).

Um die Entscheidung für eine der beiden Hypothesen vorzubereiten, wird zunächst die Fehlerenergie für den gesamten Bildausschnitt entsprechend der Vorschrift (13) berechnet. Danach werden die vier getrennten Fehlerenergien für die Sub-Bildausschnitte entsprechend der Vorschrift (14) berechnet.

Die Entscheidung fällt für Hypothese 1 (getrennte Weiterbehandlung der vier Sub-Bildausschnitte), wenn folgende zwei Bedingungen erfüllt sind:

$$(1/L^2)E_t > s_o \qquad (b1)$$

$$\sum_{k=1}^{4} E_t^{(k)} < s_u \, E_t \qquad\qquad (b2)$$

Ist eine der beiden Bedingungen (b1) oder (b2) nicht erfüllt, so entscheidet sich das Verfahren für die Hypothese 2.

Nachdem ein ganzes Bild oder ein größerer Bildausschnitt in der beschriebenen Weise mit der Blockgröße L bearbeitet wurde, kann anschließend die Blockgröße L verdoppelt werden, und das Verfahren kann wiederholt werden (rekursives Zusammenfassen). Das Verfahren kann hierarchisch bis zu beliebigen Blockgrößen fortgesetzt werden. Die zusammengefaßten Gebiete sind quadratische Blöcke unterschiedlicher Größe, welche durch einen Quadtree beschrieben werden können. Für jeden dieser Blöcke existiert als Ergebnis des Verfahrens ein Parametersatz bestehend aus einem Bewegungsvektor und einem Verstärkungsfaktor, welcher für alle Pixel innerhalb des Blockes gilt. Die variable Blockgröße gestattet es dem Verfahren, spatiale Instationäritäten in der Szene (z. B. Ränder bewegter Objekte) optimal zu modellieren und dennoch in stationären Gebieten eine sehr hohe Datenkompression zu erzielen. Die zu übertragende Information besteht schließlich aus

1. "Quadtree"
2. "Bewegungsvektoren"
3. "Verstärkungsfaktoren",

welche entsprechend Fig. 3 Huffman-codiert und zum Empfänger übertragen werden. Diese drei Informationen beinhalten die vollständige Beschreibung der Szene.

## 4. Rate Buffer (RB) und Rate Buffer Contri (RBC):

In Abhängigkeit vom Füllstand des RB erzeugt die Baugruppe RBC eine adaptive Schwelle $s_o$, in einer Weise, daß $s_o$ bei hohem Füllstand des RB angehoben wird, so daß das Verfahren eine weniger feine Blockunterteilung und damit eine geringere primäre Datenrate erzeugt.

## 5. Inverses Filter (IF) und Bildspeicher (BS):

Der Bildspeicher (BS) ist über ein inverses Filter (IF) auf sich selbst zurückgekoppelt. Das IF entnimmt aus dem angelieferten Quadtree-Code die für ein Bild oder für einen Teilbereich eines Bildes geltende Unterteilung in Blöcke unterschiedlicher Größe. Jeder dieser Blöcke wird schließlich entsprechend dem ebenfalls übertragenen Bewegungsvektor verschoben und entsprechend dem übertragenen Verstärkungsfaktor verstärkt und schließlich in den Bildspeicher zurückgeschrieben. Dies geschieht in einer Weise, daß dieselbe Verschiebung und Verstärkung auf alle Pixel des Blockes entsprechend der Vorschrift (13) für Hypothese 1 oder entsprechend der Vorschrift (14) für Hypothese 2 angewendet wird.

Der Initialzustand beim Start des Coders und Decoders ist der einheitliche Grauwert "128" im Bildspeicher.

**Patentansprüche**

1. Verfahren zur szenenmodellgestützten Bilddatenreduktion für digitale Fernsehsignale, wobei ein zum Zeitpunkt t angeliefertes Bildsignal zu codieren ist, wobei als Referenz ein bereits zum Zeitpunkt t-1 codiertes Vorgängerbild aus einer Szene in einem Bildspeicher vorliegt und wobei die Bild-zu- Bild-Information aus einer Verstärkung, einer Verschiebung und einer adaptiv gewonnenen Quadtree-Teilungsstruktur besteht, **gekennzeichnet** durch folgende Merkmale:

a) das Verfahren wird initialisiert, indem in einen Bildspeicher eines sendeseitigen Coders und in einen Bildspeicher des empfangsseitigen Decoders in gleicher Weise vollständig, d. h. über sämtliche Bildelemente (pixel), ein einheitlicher vorgegebener Grauwert eingeschrieben wird;

b) das Bild zum Zeitpunkt t wird durch ein durch Verstärkung und Verschiebung von Blöcken variabler Größe aus dem im Bildspeicher vorhandenen Referenzbild ermitteltes Bild approximiert, wobei diese Blöcke durch eine Quadtree-Datenstruktur charakterisiert sind, und wobei die Größe dieser Blöcke derart variiert wird, daß ausgehend von Unterblöcken (1,2, 3,4) einer kleinsten vorgegebenen Blockgröße nxn innerhalb eines Grundblocks bedarfsweise jeweils vier derartige Unterblöcke (1,2,3,4) zu einem Oberblocke der Größe 2n x 2n zusammengefaßt werden, welche Oberblöcke (1, 2, 3, 4) bedarfsweise wiederum in derselben Art und Weise zu einem weiteren Oberblock usf. zusammengefaßt werden, daß die sich auf diese Weise ergebende Unterteilungsstruktur der Blöcke an die Struktur der zu codierenden Bild-zu-Bild-Information (Innovation) anpaßt, wobei die vier Unterblöcke (1, 2, 3, 4) zu einem Oberblock zusammengefaßt werden, wenn die Bedingungen

$$(1/L^2)\ E_t > s_0$$

$$\sum_{k=1}^{4} E_t^{(K)} < s_u\ E_t$$

erfüllt sind, wobei $S_o$ eine obere Schwelle und $S_u$ eine untere Schwelle für einen Hypothesenentscheider sind, und wobei $E_t$ die Prädiktionsfehlerenergie im Oberblock und $E_t^{(k)}$, $k = 1,2,3,4$ die Prädiktionsfehlerenergien in den vier Unterblöcken sind, welche durch die formelmäßigen Beziehungen

$$E_t = \sum_{x=0}^{L-1} \sum_{y=0}^{L-1} \left[ s_t(x,y) - a(i_{opt},\ j_{opt}) s_{t-1}(x+i_{opt},\ y+j_{opt}) \right]^2$$

$$E_t^{(k)} = \sum_{x=\alpha}^{\beta} \sum_{y=\gamma}^{\delta} \left[ s_t(x,y) - a^{(k)}(i_{opt}^{(k)}, j_{opt}^{(k)}) s_{t-1}(x+i_{opt}^{(k)}, y+j_{opt}^{(k)}) \right]^2$$

gegeben sind, wobei $S_t$ das Bildsignal zum Zeitpunkt t und $S_{t-1}$ das Bildsignal zum Zeitpunkt t-1 ist und wobei $i_{opt}$ und $j_{opt}$ die optimale Verschiebung des Bildsignals im Bildspeicher für den Oberblock und

10

$$i^{(k)}_{opt} \quad und \quad j^{(k)}_{opt}$$

die optimalen Verschiebungen des Bildsignals im Bildspeicher für die vier Unterblöcke $k = 1,2,3,4$ charakterisieren und wobei $a(i_{opt}, j_{opt})$ der auf das Bildsignal im Bildspeicher angewendete Verstärkungsfaktor für den Oberblock ist, wobei L*L die Dimension des Oberblockes angibt und wobei $a^{(k)}(i_{opt}, j_{opt})$ die auf das Bildsignal im Bildspeicher angewendeten optimalen Verstärkungsfaktoren in den Unterblöcken $k = 1,2,3,4$ ist, wobei $\beta$ und $\delta$ die Summationsgrenzen für die Unterblöcke darstellen, welche wie folgt definiert sind

| K | $\alpha$ | $\beta$ | $\gamma$ | $\delta$ |
|---|-----|---------|-----|---------|
| 1 | 0   | (L/2)-1 | 0   | (L/2)-1 |
| 2 | 0   | (L/2)-1 | L/2 | L-1     |
| 3 | L/2 | L-1     | 0   | (L/2)-1 |
| 4 | L/2 | L-1     | L/2 | L-1     |

wobei die optimale Verschiebung $i_{opt}$, $j_{opt}$ für den Oberblock entsprechend dem Verfahrensablauf

```
AMAX = 0
FOR i = -m, -m+1,...m -1, m do the following:
 FOR j = -m, -m+1,...m-1, m do the following:
  RRHO = ρ(i,j) * φ(i,j)
  IF(RRHO > AMAX) THEN
  AMAX = RRHO
  i    = i
   opt
  j    = j
   opt
  ENDIF
```

ermittelt wird und wobei die optimalen Verschiebungen

$$i^{(k)}_{opt} \quad und \quad j^{(k)}_{opt}$$

in den vier Unterblöcken k-1,2,3,4 entsprechend dem Verfahrensablauf

```
FOR K = 1, 2, 3, 4 do the following:
AMAX = O
FOR i = m, -m+1..., m-1 m do the following:
    FOR j = m, -m+1..., m-1, m do the following:
        RRHO = ρ(k)(i,j) * φ(i,j)
        IF(RRHO > AMAX) THEN
            AMAX = RRHO
            i(k)opt = i
            j(k)opt = j
        ENDIF
```

ermittelt werden, wobei die zu maximierende Größe $\rho(i,j)$ für die Oberblöcke entsprechend der Beziehung

$$\rho(i,j) = \frac{C_t(i,j) \quad C_t(i,j)}{A_{t-1}(i,j)}$$

definiert ist und die Größen $\rho^{(k)}(i,j)$, k = 1,2,3,4 entsprechend der Beziehung

$$\rho^{(k)}(i,j) = \frac{C_t^{(k)}(i,j) \ (C_t^{(k)}(i,j)}{A_{t-1}^{(k)} \quad (i,j)}$$

definiert sind und wobei $\phi(i,j)$ eine multiplikative sog. Kostenfunktion der Form

$$\phi(i,j) = 1 - g\sqrt{i^2 + j^2}$$

darstellt, wobei g eine positive reelle Zahl und i und j die aktuelle Verschiebung sind und wobei die Größe $C_t(i,j)$ die Kreuzkorrelationsfunktion zwischen dem Bildsignal zum Zeitpunkt t und dem Bildsignal im Bildspeicher im Oberblock entsprechend der Beziehung

$$C_t(i,j) \sum_{x=0}^{L-1} \sum_{y=0}^{L-1} s_t(x,y) \, s_{t-1}(x+i, \, y+j)$$

berechnet wird und wobei die Größen $C_t^{(k)}(i,j)$, k = 1,2,3,4 die sinngemäßen Kreuzkorrelationsfunktionen in den Unterblöcken k = 1,2,3,4 definiert als

EP 0 309 669 B1

$$C_t^{(k)}(i,j) = \sum_{x=\alpha}^{\beta} \sum_{y=\gamma}^{\delta} s_t(x,y)\, s_{t-1}(x+i, y+j)$$

sind und wobei die Größe $A_{t-1}(i,j)$ die Energie des Signals im Bildspeicher für den Oberblock entsprechend der Definition

$$A_{t-1}(i,j) = \sum_{x=0}^{L-1} \sum_{y=0}^{L-1} s_{t-1}^{2}(x+i,\ y+j)$$

und die Größen $A^{(k)}_{(t-1)}(i,j)$, $k = 1,2,3,4$ die Energien des Signals im Bildspeicher für die vier Unterblöcke $k = 1,2,3,4$ entsprechend der Definition

$$A_{t-1}^{(k)}(i,j) = \sum_{x=\alpha}^{\beta} \sum_{y=\gamma}^{\delta} s_{t-1}^{2}(x+i,\ y+j)$$

sind.

## Claims

1. Method for scene-model-aided image data reduction for digital television signals, in which a video signal supplied at time t is to be coded, in which a precursor frame from a scene, already coded at time t-1, is present in a frame buffer and in which the interframe information consists of an amplification, a displacement and an adaptively obtained quad-tree division structure, characterised by the following features:

   a) the method is initialised by a uniform predetermined greyscale value being written completely, that is to say over all pixels, in the same manner into a frame buffer of a transmitting-end coder and into a framed buffer of the receiving-end decoder,

   b) the frame at time t is approximated by a frame determined from the reference frame existing in the frame buffer by amplification and displacement of variable-size blocks, these blocks being characterised by a quad-tree data structure, and the size of these blocks being varied in such a manner that, starting with sub-blocks (1, 2, 3, 4) of a smallest predetermined block size nxn within a basic block, in each case four such sub-blocks (1, 2, 3, 4) are combined to a superblock of size 2n x 2n, if necessary, which superblocks (1, 2, 3, 4), in turn, are combined in the same manner to form a further superblock and so forth, if necessary, that the subdivision structure of the blocks resulting in this manner is matched to the structure of the interframe information to be coded (innovation), the four sub-blocks (1, 2, 3, 4) being combined to form a superblock when the following conditions are satisfied:

$(1/L^2)\, E_t > S_O$

$$\sum_{k=1}^{4} E_t^{(K)} < S_u\, E_t$$

13

where $S_o$ is an upper threshold and $S_u$ is a lower threshold for a hypotheses decision circuit, and where $E_t$ is the prediction error energy in the superblock and $E_t^{(k)}$, $k = 1,2,3,4$ are the prediction error energies in the four sub-blocks, which are given by the relations of the formula

$$E_t = \sum_{x=0}^{L-1} \sum_{y=0}^{L-1} \left[ s_t(x,y) - a(i_{opt},\ j_{opt}) s_{t-1}(x+i_{opt},\ y+j_{opt}) \right]^2$$

$$E_t^{(k)} = \sum_{x=\alpha}^{\beta} \sum_{y=\gamma}^{\delta} \left[ s_t(x,y) - a^{(k)}(i_{opt}^{(k)}, j_{opt}^{(k)}) s_{t-1}(x+i_{opt}^{(k)}, y+j_{opt}^{(k)}) \right]^2$$

where $S_t$ is the video signal at time t and $S_{t-1}$ is the video signal at time t-1 and where $i_{opt}$ and $j_{opt}$ characterise the optimum displacement of the video signal in the frame buffer for the superblock and

$$i_{opt}^{(k)} \quad \text{and} \quad j_{opt}^{(k)}$$

characterise the optimum displacements of the video signal in the frame buffer for the four sub-blocks $k = 1,2,3,4$ and where $a(i_{opt},\ j_{opt})$ is the amplification factor for the superblock, applied to the video signal in the frame buffer, where L*L specifies the dimension of the superblock and where $a^{(k)}$-$(i_{opt}, j_{opt})$ are the optimum amplification factors in the sub-blocks $k = 1, 2, 3, 4$ applied to the video signal in the frame buffer, where $\beta$ and $\delta$ represent the summation limits for the sub-blocks which are defined as follows:

| K | $\delta$ | $\beta$ | $\gamma$ | $\delta$ |
|---|---|---|---|---|
| 1 | 0 | (L/2)-1 | 0 | (L/2)-1 |
| 2 | 0 | (L/2)-1 | L/2 | L-1 |
| 3 | L/2 | L-1 | 0 | (L/2)-1 |
| 4 | L/2 | L-1 | L/2 | L-1 |

where the optimum displacement $i_{opt}$, $j_{opt}$ for the superblock is determined in accordance with the method sequence

```
AMAX = 0
FOR i = -m, -m+1,...m -1, m do the following:
 FOR j = -m, -m+1,...m-1, m do the following:
  RRHO = ρ(i,j) * φ(i,j)
  IF(RRHO > AMAX) THEN
  AMAX = RRHO
  i_opt= i
  j_opt= j
  ENDIF
```

and where the optimum displacements

$$i_{opt}^{(k)} \quad \text{and} \quad j_{opt}^{(k)}$$

and the four sub-blocks k = 1,2,3,4 are determined in accordance with the method sequence

```
FOR K = 1, 2, 3, 4 do the following:
AMAX = 0
FOR i = m, -m+1..., m-1 m do the following:
  FOR j = m, -m+1..., m-1, m do the following:
    RRHO = ρ(k)(i,j) * φ(i,j)
    IF(RRHO > AMAX) THEN
    AMAX = RRHO
    i(k)
     opt = i
    j(k)
     opt = j
    ENDIF
```

where the quantity $\rho$ (i,j) to be maximised for the superblocks is defined in accordance with the relation

$$\rho \ (i, \ j) \ = \ \frac{C_t(i,j) \quad C_t(i,j)}{A_{t-1}(i,j)}$$

and the quantities $\rho^{(k)}(i,j)$, k = 1,2,3,4 are defined in accordance with the relation

$$\rho^{(k)}(i,j) \ = \ \frac{C_t^{(k)}(i,j) \ (C_t^{(k)}(i,j)}{A_{t-1}^{(k)} \ (i,j)}$$

and where $\phi$ (i,j) represents a multiplicative so-called cost function of the form

$$\phi(i,j) = 1 - g \sqrt{i^2 + j^2}$$

where g is a positive real number and i and j are the actual displacement and where the quantity $C_t$-(i,j) denotes the cross-correlation function between the video signal at time t and the video signal in the frame buffer in the superblock and is calculated in accordance with the relation

$$C_t(i,j) \ \sum_{x=0}^{L-1} \sum_{y=0}^{L-1} \ s_t(x,y) \ s_{t-1}(x+i, \ y+j)$$

and where the quantities $C_t^{(k)}(i,j)$, k = 1,2,3,4 are the corresponding cross-correlation functions in the subblocks k = 1,2,3,4 and are defined as

$$C_t^{(k)}(i,j) = \sum_{x=\alpha}^{\beta} \sum_{y=\gamma}^{\delta} s_t(x,y) \, s_{t-1}(x+i, \, y+j)$$

and where the quantity $A_{t-1}(i,j)$ is the energy of the signal in the frame buffer for the superblock in accordance with the definition in the

$$A_{t-1}(i,j) = \sum_{x=0}^{L-1} \sum_{y=0}^{L-1} s_{t-1}^{2}(x+i, \, y+j)$$

and the quantities $A^{(k)}_{(t-1)}(i,j)$, $k = 1,2,3,4$ are the energies of the signal in the frame buffer for the four sub-blocks $k = 1,2,3,4$ in accordance with the definition.

$$A_{t-1}^{(k)}(i,j) = \sum_{x=\alpha}^{\beta} \sum_{y=\gamma}^{\delta} s_{t-1}^{2}(x+i, \, y+j)$$

## Revendications

1. Procédé de réduction de données d'images, assistées par des modèles de scènes, pour des signaux numériques de télévision, selon lequel il faut coder un signal d'image délivré à l'instant t, et selon lequel il est prévu comme référence une image précédente, déjà codée à l'instant t-1 et tirée d'une scène dans une mémoire d'images, et selon lequel l'information d'image à image est constituée par un grandissement, un décalage et une structure de division en arbre Quadtree, obtenue de façon adaptative, caractérisé par les particularités suivantes:

a) le procédé est initialisé par le fait qu'une valeur de gris prédéterminée et uniforme est enregistrée de la même manière complètement, c'est-à-dire sur tous les éléments d'image (pixels), dans une mémoire d'images d'un codeur situé côté émission et dans une mémoire d'images du décodeur situé côté réception;

b) on reproduit de façon approximative l'image obtenue à l'instant t au moyen d'une image déterminée par grandissement et décalage de blocs de taille variable à partir de l'image de référence obtenue dans la mémoire d'images, ces blocs étant caractérisés par une structure de données en arbre Quadtree, et la taille de ces blocs étant modifiée par le fait qu'à partir de sous-blocs (1,2,3,4) possédant une taille très petite prédéterminée n x n à l'intérieur d'un bloc de base, le cas échéant respectivement quatre sous-blocs (1,2,3,4) de ce type sont réunis pour former un bloc supérieur ayant pour taille 2n x 2n, lesquels blocs supérieurs (1,2,3,4) sont à nouveau réunis le cas échéant de la même manière pour former un autre bloc supérieur, etc, de sorte que la struture, obtenue de cette manière, de subdivision des blocs est adaptée à la structure de l'information image par image devant être codée (innovation), les quatre sous-blocs (1,2,3,4) étant réunis pour former un bloc supérieur lorsque les conditions

$(1/L^2) \, E_t > s_O$

$$\sum_{k=1}^{4} \varepsilon_t^{(K)} < s_u \ \varepsilon_t$$

sont satisfaites, $S_o$ désignant un seuil supérieur et $S_u$ un seuil inférieur pour un discriminateur d'hypothèses, et $E_t$ l'énergie d'erreur de prédiction dans le bloc supérieur et $E_t^{(k)}$, k = 1,2,3,4, les énergies d'erreurs de prédiction dans les quatre sous-blocs, ces énergies étant définies par les relations sous forme de formules

$$\varepsilon_t = \sum_{x=0}^{L-1} \sum_{y=0}^{L-1} \left[ s_t(x,y) - a(i_{opt}, \ j_{opt}) s_{t-1}(x+i_{opt}, \ y+j_{opt}) \right]^2$$

$$\varepsilon_t^{(k)} = \sum_{x=\alpha}^{\beta} \sum_{y=\gamma}^{\delta} \left[ s_t(x,y) - a^{(k)}(i_{opt}^{(k)}, j_{opt}^{(k)}) s_{t-1}(x+i_{opt}^{(k)}, y+j_{opt}^{(k)}) \right]^2$$

$S_t$ caractérisant le signal d'image à l'instant t et $S_{t-1}$ le signal d'image à l'instant t-1, et $i_{opt}$ et $j_{opt}$ représentant le décalage optimal du signal d'image dans la mémoire d'images pour e bloc supérieur et $i_{opt}^{(k)}$ et $j_{opt}^{(k)}$ caractérisant les décalages optimum du signal d'image dans la mémoire d'images pour les quatre sous-blocs k = 1,2,3,4, et $a(i_{opt},j_{opt})$ représentant le facteur de grandissement, appliqué au signal d'image dans la mémoire d'images, pour le bloc supérieur, L*L représentant la dimension du bloc supérieur et $a^{(k)}(i_{opt},j_{opt})$ représentant les facteurs optimum de grandissement, appliqués au signal d'image dans la mémoire d'images, dans les sous-blocs k = 1,2,3,4, tandis que $\beta$ et $\delta$ représentent les limites de sommation pour les sous-blocs et sont définis comme suit

| K | $\alpha$ | $\beta$ | $\gamma$ | $\delta$ |
|---|---|---|---|---|
| 1 | 0 | (L/2)-1 | 0 | (L/2)-1 |
| 2 | 0 | (L/2)-1 | L/2 | L-1 |
| 3 | L/2 | L-1 | 0 | (L/2)-1 |
| 4 | L/2 | L-1 | L/2 | L-1 |

le décalage optimal $i_{opt}$, $j_{opt}$ pour le bloc supérieur étant déterminé conformément à la procédure

```
AMAX = 0
FOR i = -m, -m+1,...m -1, m faire ce qui suit :
  FOR j = -m, -m+1,...m-1, m faire ce qui suit :
    RRHO = ρ(i,j) * φ(i,j)
    IF(RRHO > AMAX) THEN
    AMAX = RRHO
    i_opt = i
    j_opt = j
    ENDIF
```

et les décalages optima $i_{opt}^{(k)}$ et $j_{opt}^{(k)}$ dans les quatre sous-blocs $k = 1,2,3,4$ étant déterminés conformément à la procédure

```
FOR K = 1, 2, 3, 4 faire ce qui suit :
 AMAX = 0
 FOR i = m, -m+1..., m-1 m faire ce qui suit :
  FOR j = m, -m+1..., m-1, m faire ce qui suit :
   RRHO = P(k)(i,j) * φ (i,j)
   IF(RRHO > AMAX) THEN
   AMAX = RRHO
    i(k)opt = i
    j(k)opt = j
   ENDIF
```

la grandeur maximale $\rho(i,j)$ pour le bloc supérieur étant définie conformément à la relation

$$\rho\,(i,j) \;=\; \frac{C_t(i,j)\;\;C_t(i,j)}{A_{t-1}(i,j)}$$

et les grandeurs $\rho^{(k)}(i,j)$, $k = 1,2,3,4$ étant définies conformément à la relation

$$\rho^{(k)}(i,j) \;=\; \frac{C_t^{(k)}(i,j)\;(C_t^{(k)}(i,j)}{A_{t-1}^{(k)}\;\;(i,j)}$$

et $\phi(i,j)$ représentant ce qu'on appelle une fonction de coût multiplicative ayant pour forme

$$\phi(i,j) \;=\; 1 - g\,\sqrt{i^2 + j^2}$$

g représentant un nombre réel positif et i et j le décalage réel, et la grandeur $C_t(i,j)$ représentant la fonction de corrélation croisée entre le signal d'image à l'instant t et le signal dans la mémoire d'images dans le bloc supérieur étant calculé conformément à la relation

$$C_t(i,j)\;\sum_{x=0}^{L-1}\;\sum_{y=0}^{L-1}\;s_t(x,y)\;s_{t-1}(x+i,\,y+j)$$

et les grandeurs $C_t^{(k)}(i,j)$, $k = 1,2,3,4$, représentant des fonctions appropriées de corrélation croisée dans les sousblocs $k = 1,2,3,4$ étant définies par

$$C_t^{(k)}(i,j) = \sum_{x=\alpha}^{\beta} \sum_{y=\gamma}^{\delta} s_t(x,y) \, s_{t-1}(x+i, y+j)$$

et la grandeur $A_{i-1}(i,j)$ représentant l'énergie du signal dans la mémoire d'images pour le bloc supérieur conformément à la définition

$$A_{t-1}(i,j) = \sum_{x=0}^{L-1} \sum_{y=C}^{L-1} s_{t-1}^{2}(x-i, y+j)$$

et les grandeurs $A^{(k)}_{t-1}(i,j)$, $k = 1,2,3,4$ représentant les énergies du signal dans la mémoire d'images pour les quatre sous-blocs $k = 1,2,3,4$ conformément à la définition

$$A_{t-1}^{(k)}(i,j) = \sum_{x=\alpha}^{\beta} \sum_{y=\gamma}^{\delta} s_{t-1}^{2}(x+i, y+j)$$

# FIG 1

BSCH: BEWEGUNGSSCHÄTZALGORITHMUS

BS: BILDSPEICHER

RB: RATE BUFFER

RBC: RATE BUFFER CONTROL

HC: HUFFMAN CODER

T: TRANSFORMATION

IT: INVERSE TRANSFORMATION

Q: QUANTISIERER

# FIG 2

RB: RATE BUFFER

HDC: HUFFMAN DECODER

IT: INVERSE TRANSFORMATION

BS: BILDSPEICHER

## FIG 3

BILD$_Q$(t-1)

EINGANGS-SIGNAL

BILD (t)

ACP

IF

BS

PACTS

QUAD-TREE

SZMHG

VERSCHIEBUNGSVEKTOREN

VERSTÄRKUNGSFAKTOREN

Q

HC

HC

MUX

KANAL

RBS

RBC

ACP: AUTOCORRELATION UND CROSSCORRELATION PROCESSOR

PACTS: PUFFERSPEICHER FÜR AUTOCORRELATION UND CROSSCORRELATION TEILSUMMEN

SZMHG: PARAMETRISCHES SZENENMODELL UND HYPOTHESENGENERATOR

IF: INVERSES FILTER

BS: BILDSPEICHER

RB: RATE BUFFER

RBC: RATE BUFFER CONTROL

HC: HUFFMAN CODER

Q: QUANTISIERER

## FIG 4

IF

BS

KANAL

RBE

DEMUX

QUAD-TREE

HDC

VERSCHIEBUNGSVEKTOREN

HDC

VERSTÄRKUNGSFAKTOREN

AUSGANGS-SIGNAL

BILD$_Q$(t)

BS: BILDSPEICHER

IF: INVERSES FILTER

HDC: HUFFMAN DECODER

RB: RATE BUFFER

FIG 5

FIG 6

BILD ( t )

FIG 7